# FASCICULE DE BREVET EUROPEEN

(11) **EP 0 488 099 B1**
(45) Date de publication et mention de la délivrance du brevet: **24.01.1996**
(21) Numéro de dépôt: 91120038.4
(22) Date de dépôt: 25.11.1991
(51) Int. Cl.: H01R 9/05

(54) **Boîtier de protection contre les perturbations électromagnétiques, pour dispositif de connexion électrique**
Schutzkasten gegen elektromagnetische Störungen für elektrische Verbinderanordnung
Protection box against electromagnetic disturbances for electric connection device

(30) Priorité: 30.11.1990 FR 9015041
(43) Date de publication de la demande: 03.06.1992
(73) Titulaire: ALCATEL CIT, F-75008 Paris (FR)
(72) Inventeur: Riviere, Joel, F-91160 Longjumeau (FR); Jamet, Daniel, F-91620 Nozay (FR)
(74) Mandataire: Weinmiller, Jürgen

(56) Documents cités:
- EP-A- 0 201 035
- EP-A- 0 385 020
- GB-A- 985 249
- GB-A- 2 007 442
- IBM TECHNICAL DISCLOSURE BULLETIN vol. 30, no. 6, novembre 1987, pages 76-78, Armonk, NY, US; "Pluggable EMC shield and cable strain relief system"

## Description

La présente invention concerne un boîtier de protection contre les perturbations électromagnétiques, pour dispositif de connexion électrique comportant un ou plusieurs éléments de connexion électrique tels que des connecteurs ou des barrettes de connexion par exemple, aptes à raccorder entre eux au moins deux câbles électriques dont l'un au moins est muni d'un blindage de protection contre les perturbations électromagnétiques.

La présente invention est notamment applicable à la protection contre les perturbations électromagnétiques des éléments de connexion électrique utilisés dans les centraux de télécommunications, pour raccorder entre eux les bâtis d'équipements de ces centraux. Ces bâtis d'équipements sont plus précisément raccordés au moyen d'une part de connecteurs qui raccordent suivant un schéma fixe ces équipements à des câbles, dits câbles d'équipements, et d'autre part de barrettes de connexion, appelées dans ce cas réglettes de répartiteur, qui raccordent ces câbles d'équipements à des câbles appelés jarretières reliant deux à deux ces réglettes de répartiteur, suivant un schéma modifiable permettant d'obtenir le schéma d'exploitation souhaité pour ces centraux.

La présente invention est notamment applicable à la protection contre les perturbations électromagnétiques de ces réglettes de répartiteur.

Un boîtier pour réglettes de répartiteur est décrit dans la demande de brevet français n° 2 408 264. Ce boîtier a cependant uniquement pour fonction de contenir de telles réglettes et n'est pas conçu pour assurer leur protection contre les perturbations électromagnétiques, la génération d'équipements pour laquelle il a été developpé ne réquérant pas une telle protection.

Dans les matériels de télécommunications plus récents, soumis à des normes de protection plus sévères contre les perturbations électromagétiques, les bâtis d'équipements sont par contre munis d'enceintes de protection et les câbles, de blindages de protection. Il importe alors de protéger également ces éléments de connexion électrique et notamment ces réglettes de répartiteur contre les perturbations électromagnétiques.

Le document GB-A-985 249, qui correspond au préambule de la revendication 1, décrit un boîtier pour un dispositif de connexion électrique apte à raccorder un câble électrique muni d'un blindage. Ce boîtier comporte une première demi-coquille réalisée en métal, et munie, sur une face interne, d'un ergot de mise en contact avec le blindage du câble, ce blindage ayant été dénudé. Ce boîtier comporte une seconde demi-coquille réalisée en matière plastique, et munie, sur une face interne, de deux reliefs destinés à appuyer sur le blindage du câble. Ces deux reliefs pressent le câble sur l'ergot lorsque les deux demi-coquilles sont assemblées, afin d'assurer une retenue du câble et un bon contact entre l'ergot et le blindage du câble.

Ce boîtier permet donc de relier sans soudure, ni vis, le blindage du câble à une demi-coquille du boîtier qui est reliée par ailleurs à un potentiel de référence. Cependant un tel boîtier présente l'inconvénient de ne pas retenir le câble tant que les deux demi-coquilles ne sont pas assemblées. Cet inconvénient est particulièrement gênant si on veut réaliser un boîtier convenant pour un dispositif de connexion recevant de nombreux câbles, comme c'est le cas pour une réglette de répartiteur.

La présente invention a pour but la réalisation d'un boîtier de protection contre les perturbations électromagnétiques, pour un dispositif de connexion électrique, particulièrement utilisable dans ce type d'application.

La présente invention a pour objet un boîtier de protection selon la revendication 1.

D'autres caractéristiques de la présente invention apparaîtront à la lecture de la description suivante d'un exemple de réalisation d'un boîtier suivant l'invention, cet exemple de réalisation correspondant plus particulièrement, dans l'application précitée, à la protection des éléments de connexion appelés réglettes de répartiteur, ledit dispositif de connexion étant en l'occurence formé de deux réglettes de répartiteur, ladite description étant faite en relation avec les dessins ci-annexés dans lesquels :
- la figure 1 est une vue en perspective montrant un ensemble de boîtiers suivant l'invention accrochés à un support, l'un d'eux étant représenté partiellement demonté, avec ses réglettes de répartiteur mises en place, ses deux demi-coquilles assemblées, et son capot ouvert,
- la figure 2 représente ces deux demi-coquilles à l'état non assemblé, et dans une vue en plan montrant leur aménagement intérieur,
- la figure 3 est une vue suivant la face avant (par référence à la vue en perspective de la figure 1) d'un boîtier suivant l'invention, avec ses réglettes de répartiteur en partie coupées pour laisser apercevoir une portion de l'intérieur de l'ensemble, et ses deux demi-coquilles assemblées,
- la figure 4 est une vue en perspective montrant de façon plus détaillée la forme des encoches et des tenons prévus sur la face latérale interne des deux-coquilles,
- la figure 5 est une vue suivant la face arrière (par référence à la vue en perspective de la figure 1) d'un boîtier suivant l'invention, avec ses deux demi-coquilles assemblées et muni d'une bride de fixation à un support de mise en place,
- la figure 6 est une vue suivant l'une des faces latérales (par référence à la vue en perspective de la figure 1) d'un boîtier suivant l'invention une fois monté et accroché à un support.

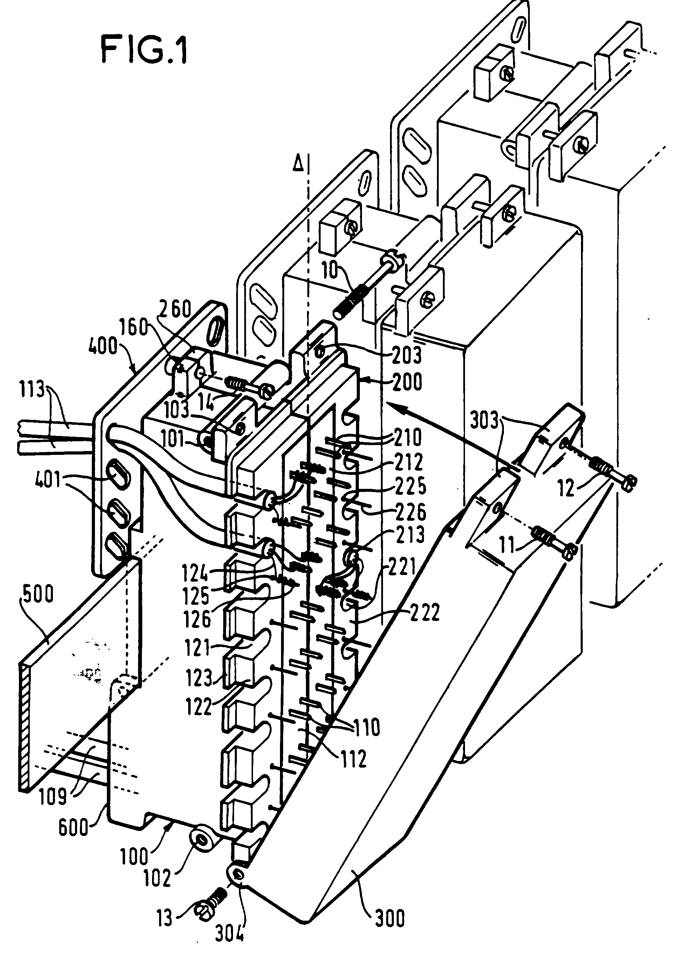

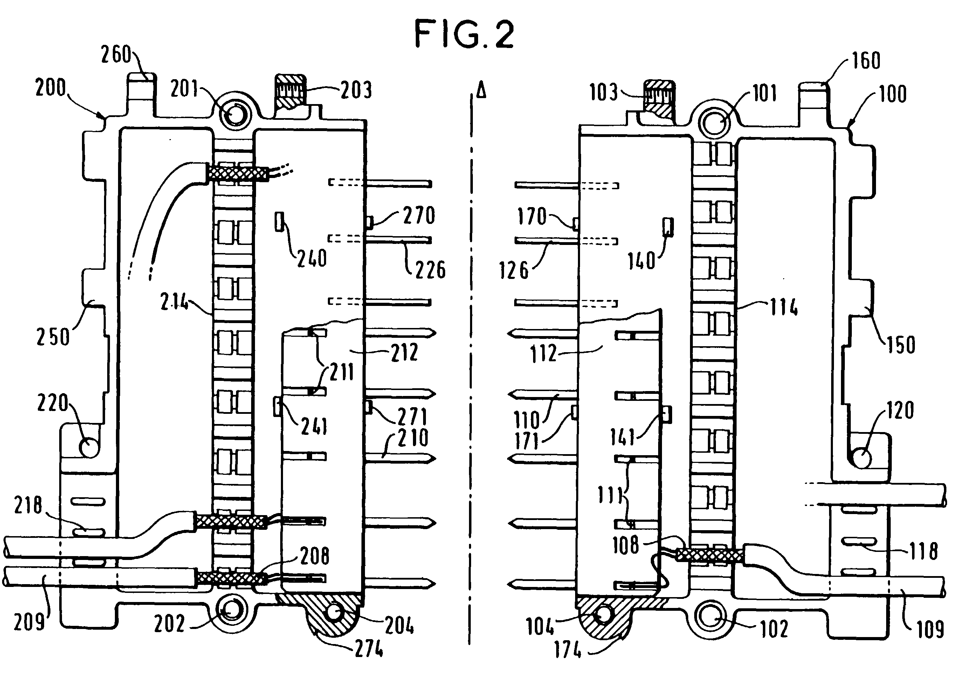

Le boîtier suivant l'invention illustré dans les figures est essentiellement constitué en deux demi-coquilles 100 et 200 qui sont représentées à l'état assemblé sur la vue en perspective de la figure 1 et à l'état non assemblé sur la vue en plan de la figure 2.

Ces deux demi-coquilles sont réalisées dans un matériau métallique étanche aux perturbations électromagnétiques et présentent, à une exception principale près qui sera mentionnée plus loin, sensiblement une symétrie de structure par rapport à un axe vertical Δ autour duquel, dans leur position illustrée sur la figure 2, elles sont susceptibles de pivoter pour venir au contact l'une de l'autre et former l'ensemble représenté en perspective sur la figure 1.

Chacune de ces demi-coquilles a, dans l'exemple de réalisation illustré, une forme sensiblement en demi-parallélépipède ouvert sur l'une de ses faces latérales (par référence à la vue en perspective de la figure 1) destinée à venir au contact de l'autre demi-coquille, permettant, une fois ces deux demi-coquilles assemblées, de constituer un volume intérieur sensiblement parallélépipédique, apte à contenir, dans cet exemple, deux réglettes de repartiteur, respectivement 112, 212 aptes à raccorder chacune, dans cet exemple, huit câbles d'équipements tels que 109, 209 munis chacun d'une tresse métallique de protection contre les perturbations électromagnétiques, respectivement 108, 208, à huit jarretières telles que 113, 213.

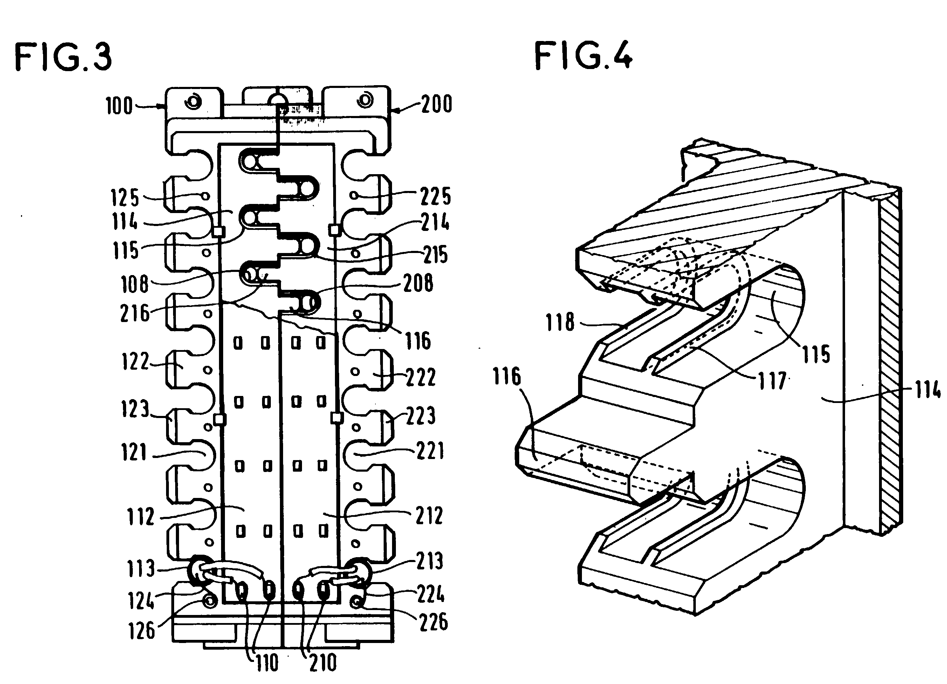

Chacune de ces demi-coquilles est en outre, dans cet exemple :
- munie sur ses faces supérieure et inférieure d'éléments, respectivement 101, 102 et 201, 202 permettant sa fixation, en l'occurrence au moyen de vis telles que 10, à l'autre demi-coquille, dans l'exemple de réalisation choisi, ces éléments se présentent sous la forme de tubes, à paroi intérieure filetée, intégrés aux demi-coquilles et se disposant deux à deux bout à bout lors de la réunion de ces dernières,
- ouverte localement, sur sa face arrière, en l'occurrence à la partie inférieure de celle-ci pour constituer une demi-ouverture formant, une fois réunie à celle, symétrique par rapport à l'axe Δ, de l'autre demi-coquille, une ouverture pour l'introduction, à l'intérieur du boîtier, d'un faisceau de seize câbles d'équipements tels que 109, 209,
- ouverte sur sa face avant pour constituer une demi-ouverture formant, une fois réunie à celle, symétrique par rapport à l'axe Δ, de l'autre demi-coquille, une ouverture permettant, dans la configuration illustrée sur la figure 1, un accès, en vue de modifier le schéma de raccordement des jarretières, à ceux des contacts des réglettes de répartiteur qui sont raccordés à ces jarretières, sans qu'il soit nécessaire pour cela de démonter l'ensemble formé par les deux demi-coquilles assemblées, la face

avant du boîtier étant alors, en dehors de ces accès, reconstituée au moyen d'un capot 300 pour former un boîtier étanche aux perturbations électromagnétiques,
- munie sur ses faces supérieure et inférieure d'éléments filetés respectivement 103, 104 et 203, 204, permettant la fixation, en l'occurence au moyen de vis telles que 11, 12, 13, du capot 300 à cette demi-coquille, le capot 300 possédant, en regard de ces éléments filetés, des aménagements tels que 303 et 304 pour le passage desdites vis,
- munie, sensiblement dans la partie centrale de sa face latérale interne, d'une arête verticale, respectivement 114, 214, comportant des encoches, telles que 115, 215, séparées par des tenons, respectivement 116, 216, ces encoches et tenons étant décalés d'une demi-coquille à l'autre de façon à mettre en correspondance les tenons d'une demi-coquille avec les encoches de l'autre demi-coquille, et réciproquement, une fois celles-ci assemblées, comme représenté sur la figure 3; on notera que ce décalage constitue l'exception principale à la symétrie des deux demi-coquilles mentionnée ci-dessus.

Ces encoches sont destinées à recevoir les câbles d'équipement tels que 109, 209 une fois débarassés de leur gaine isolante extérieure à leur extrémité pour laisser apparaître sur une faible longueur leur blindage de protection 108, 208 constitué par exemple d'une tresse métallique et à assurer ainsi une mise en contact de ce blindage avec la demi-coquille correspondante.

Les tenons d'une demi-coquille, 100 par exemple, qui pénètrent dans les encoches de l'autre demi-coquille, 200 dans cet exemple, sont destinés à exercer une pression sur le blindage des câbles ainsi introduits dans les encoches de cette autre demi-coquille 200, améliorant ainsi la mise en contact de ces blindages de câble avec cette demi-coquille 200, et assurant en même temps une mise en contact de ces blindages de câble avec la demi-coquille 100, ceci étant bien entendu également vrai en inversant les rôles de ces demi-coquilles.

Une forme possible pour ces encoches et tenons est montrée de façon plus détaillée sur la vue en perspective de la figure 4.

Les dimensions des encoches sont déterminées en fonction du diamètre du blindage des câbles d'équipement pour assurer une mise en contact intime de ces blindages avec la demi-coquille considérée. Ces encoches sont en outre avantageusement munies, comme représenté de façon plus détaillée sur la figure 4 pour l'une d'entre elles, en l'occurence la demi-coquille 100, de listels tels que 117, 118 permettant d'améliorer encore la qualité de cette mise en contact.

Chaque arête verticale, respectivement 114, 214, sépare ainsi le volume intérieur délimité par la demi-coquille correspondante respectivement 100, 200 en une partie arrière dans laquelle est réalisée un éclatement du faisceau de câbles d'équipement tels que 109, 209 reçu à sa partie inférieure et un aiguillage de chacun de ces câbles vers l'une des encoches de l'arête considérée, et en une partie avant servant de logement à la réglette associée à la demi-coquille considérée. Dans cette partie avant et sur la face latérale interne des demi-coquilles ainsi que sur l'arête avant de cette face sont prévues des butées en saillie, telles que 140, 141, 170, 171 et 240, 241, 270, 271 permettant le positionnement et le maintien de ces réglettes.

Chacune de ces réglettes est donc montée avec ses contacts respectivement 111 , 211 raccordés aux câbles d'équipement, tournés vers les encoches destinées à recevoir ces câbles d'équipement, et avec ses contacts respectivement 110, 210 raccordés aux jarretières, tournés vers la face avant de la demi-coquille dans laquelle est montée cette réglette. Les contacts raccordés aux câbles d'équipement sont en l'occurence des contacts autodénudants, et les contacts raccordés aux jarretières des contacts à raccordement par wrapping.

L'accès et le maintien des jarretières telles que 113, 213 (figures 1 et 3) au boîtier une fois le capot 300 refermé, est obtenu, dans cet exemple de réalisation, au moyen d'un ensemble de créneaux prévus à la partie avant de la face latérale externe de chaque demi-coquille et destinés, en outre, comme illustré sur la figure 1, à guider ces jarretières vers l'arrière. Ces jarretières sont pour cela disposées dans la partie vide telle que 121, 221 de ces créneaux. La partie pleine de ces créneaux, telle que 122, 222 présente, vers l'extérieur de la demi-coquille correspondante, un décrochement tel que 123, 223, l'ensemble de ces décrochements servant de butée de mise en place et de multi-contacts du capot 300 avec la demi-coquille considérée.

La partie pleine de ces créneaux présente en outre, vers l'intérieur de la demi-coquille correspondante, des trous tels que 125, 225 (visibles sur la figure 3) destinés à recevoir des broches telles que 126, 226 (visibles sur la figure 1), destinées à leur tour à assurer le raccordement électrique du blindage des jarretières avec la demi-coquille considérée, ce raccordement s'effectuant ici par l'intermédiaire d'un fil métallique, tel que 124, 224, torsadé autour dudit blindage tout au long de la jarretière, accessible par dénudage de ces jarretières et raccordable aux broches 126, 226 par wrapping.

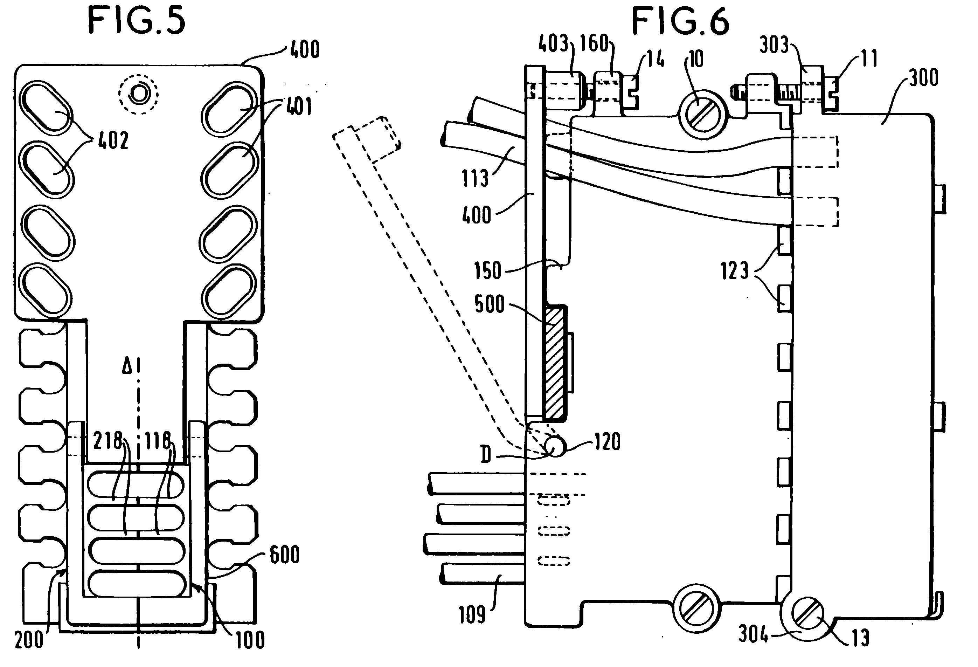

Comme il apparaît plus clairement sur les figures 5 et 6, les faces arrière, latérale et inférieure des demi-coquilles ont en outre, au niveau de l'ouverture permettant l'introduction des câbles d'équipement, un profil déterminé pour la création, une fois ces demi-coquilles assemblées, d'un passage 600 débouchant sur la dite ouverture et permettant un guidage horizontal du faisceau de seize câbles d'équipement à son introduction dans le boîtier.

Des ailettes horizontales telles que 118, respectivement 218, équipant chaque demi-coquille sont en outre prévues dans ce passage d'une part pour permettre une introduction ordonnée des câbles d'équipement, en l'occurence à raison de quatre par espace inter-ailettes, soit deux pour chaque demi-coquille, et d'autre part pour améliorer l'étanchéité du boîtier aux perturbations électromagnétiques au niveau de ce passage.

Ce passage, intégré aux demi-coquilles et aménagé en saillie au niveau de la partie inférieure de leur surface arrière, est également de forme sensiblement parallélépipédique, a ses faces latérales et inférieure (par référence à la vue en perpective de la figure 1) formées par le prolongement des faces latérales et inférieure des demi-coquilles, et sa face supérieure qui fait un angle de 90° avec la face arrière des demi-coquilles.

Ses faces latérales se prolongent en outre légèrement au-dessus de sa face supérieure pour la création d'orifices, respectivement 120, 220 servant à l'insertion d'un axe horizontal (D) de pivotement, autour d'un barreau-support 500, d'une bride de fixation 400 de ce boîtier à ce barreau support, ce pivotement permettant de dégager le boîtier de son barreau-support sans avoir à le désolidariser de sa bride de fixation.

La bride de fixation 400 présente à sa partie inférieure et comme il apparaît sur la figure 6, une partie coudée permettant d'une part ce pivotement, et d'autre part le blocage du barreau-support 500 dans la partie ainsi rendue disponible entre cette bride, la face supérieure du passage des câbles d'équipement et les faces arrière des deux demi-coquilles assemblées, du moins dans la partie de ces faces arrière située en dessous d'une saillie dont l'emplacement est fonction de la hauteur du barreau-support, ladite saillie étant obtenue par réunion de deux demi-saillies 150, 250 prévues de façon symétrique sur les deux demi-coquilles.

La bride de fixation 400 est par ailleurs évasée, à sa partie supérieure et comporte dans cette partie, de part et d'autre de son axe de symétrie vertical Δ une rangée de lumières telles que 401, 402 permettant un passage ordonné des jarretières sortant du boîtier.

Dans sa partie supérieure, et sur l'axe de symétrie Δ, la bride de fixation 400 est en outre munie d'une entretoise filetée 403 permettant sa fixation, en l'occurrence au moyen d'une vis 14, au boîtier, plus précisément à une patte, percée d'un trou en son milieu, aménagée sur ce boîtier et obtenue par réunion de deux éléments 160, 260, prévus de façon symétrique vers l'arrière de la face supérieure de chacune de ces demi-coquilles.

Avantageusement deux vis 13 sont utilisées pour la fixation du capot aux éléments 104 et 204, seule celle fixant le capot à l'élément 104 est visible sur les figures.

Afin de faciliter l'exploitation du boîtier dans les stations de télécommunications, le capot 300 est avantageusement prévu pour pouvoir pivoter de 120° environ autour de ses vis de fixation 13 servant, après déblocage, d'axe de rotation. Lors d'un tel pivotement, il vient en appui sur deux butées en saillie 174, 274 prévues à cet effet à la périphérie des éléments 104, 204 (figure 2). Ces dispositions permettent l'accès aux broches 126, 226 sans avoir à séparer complètement le capot des deux demi-coquilles assemblées.

Avantageusement également, bien qu'en pratique cela soit moins intéressant, l'arête verticale de la partie centrale de la face latérale interne de chaque demi-coquille pourrait comporter des encoches et tenons en nombres différents d'une demi-coquille à l'autre. Les tenons et enchoches de l'arête de chaque demi-coquille étant cependant en nombres égaux à respectivement ceux des encoches et tenons de l'autre demi-coquille pour permettre la mise en correspondance des tenons d'une demi-coquille avec les encoches de l'autre et réciproquement une fois les demi-coquilles assemblées.

Bien que cela soit aussi moins intéressant en pratique, on pourrait également envisager de différencier le rôle des deux demi-coquilles en ne munissant l'arête verticale de l'une d'elles que d'encoches et celle de l'autre que de tenons, une telle différentiation étant toutefois plus intéressante dans le cas d'une application où un seul couple de câbles sont à raccorder l'un à l'autre, une seule association encoche-tenon étant alors nécessaire.

Par ailleurs, il pourrait être envisagé de donner aux encoches une profondeur légèrement inférieure au diamètre des câbles munis de leurs blindages, ce qui dispenserait alors de réaliser des tenons en correspondance avec ces encoches et pourrait donc se revéler plus avantageux d'un point de vue économique. Le moyen de mise en contact de blindage de câble avec la première demi-coquille comporterait alors toujours une encoche, mais de profondeur inférieure à celle indiquée dans l'exemple de réalisation décrit plus particulièrement dans ce qui précède, et le moyen de pression contre la première demi-coquille et de mise en contact de blindage de câble avec la seconde demi-coquille se réduirait alors à une partie plate prévue en correspondance avec ladite encoche.

## Revendications

1. Boîtier de protection contre les perturbations électromagnétiques, pour dispositif de connexion électrique apte à raccorder au moins un câble électrique (109, 209), dit premier câble, muni d'un blindage (108, 208) de protection contre les perturbations électromagnétiques, à au moins un autre câble électrique (113, 213) dit second câble; comportant deux demi-coquilles (100, 200) ; ces deux demi-coquilles étant aptes à contenir, à l'état assemblé, ledit dispositif de connexion raccordant lesdits câble, et étant munies sur leur face interne, pour ledit premier câble, l'une, dite première demi-coquille, pour ce premier câble, d'un moyen (114, 115) pour sa mise en contact avec le blindage de ce premier câble sur une partie de la périphérie de ce blindage et l'autre, dite seconde demi-coquille, pour ce premier câble, d'un moyen (214, 216) pour assurer simultanément sa mise en contact avec le blindage de ce premier câble par une autre partie de la périphérie de ce blindage et une pression dudit blindage contre la première demi-coquille, à l'endroit de la mise en contact de celle-ci avec ledit blindage;
caractérisé en ce que les deux demi-coquilles sont réalisées dans un matériau étanche aux perturbations électromagnétiques et en ce que ledit moyen de mise en contact dudit blindage avec la première demi-coquille comporte une encoche (115) pratiquée dans une arête (114) prévue sur la face interne de cette demi-coquille, cette encoche ayant une largeur adaptée au diamètre dudit blindage.

2. Boîtier selon la revendication 1, caractérisé en ce que ledit moyen de pression et de mise en contact dudit blindage avec la seconde demi-coquille comporte un tenon (216) pratiqué dans une arête (214) prévue sur la face interne de cette demi-coquille, et disposé de façon à venir en regard de ladite encoche et y pénétrer une fois les deux demi-coquilles assemblées.

3. Boîtier selon la revendication 1, pour dispositif de connexion électrique apte à raccorder une pluralité de premiers câbles à une pluralité de seconds câbles, caractérisé en ce que chaque demi-coquille comporte dans ladite arête une rangée d'encoches séparées par des tenons, les rangées d'encoches et tenons des deux demi-coquilles étant disposées l'une par rapport à l'autre de façon que les tenons de chaque demi-coquille soient en regard et pénètrent dans les encoches de l'autre demi-coquille respectivement lorsque les deux demi-coquilles sont assemblées, dans chaque demi-coquille les encoches constituant ainsi autant de moyens de mise en contact du blindage de premiers câbles avec cette demi-coquille et les tenons constituant autant de moyens de pression et de mise en contact du blindage d'autres premiers câbles avec cette demi-coquille.

4. Boîtier selon l'une des revendications 1 à 3, caractérisé en ce que, ledit ou lesdits seconds câbles étant également munis d'un blindage (124, 224) de protection contre les perturbations électromagnétiques, l'une au moins des deux demi-coquilles est munie de moyens pour le raccordement électrique de ce blindage avec cette demi-coquille.

5. Boîtier selon la revendication 4, caractérisé en ce que ce dernier blindage comportant un fil métallique torsadé, ces moyens pour le raccordement électrique comportent un ou plusieurs trous (125, 225) pratiqués dans au moins une des demi-coquilles et destinés chacun à recevoir une broche (126, 226) raccordable audit ou à l'un desdits fils métalliques torsadés.

6. Boîtier selon l'une des revendications 1 à 5, caractérisé en ce que chaque demi-coquille présente une demi-ouverture formant, avec la demi-ouverture de l'autre demi-coquille, une ouverture pour l'accès à celui ou à ceux des contacts dudit dispositif de connexion électrique qui sont raccordés audit ou auxdits seconds câbles, et en ce qu'il comporte en outre un capot (300), amovible, pour assurer son étanchéité au niveau de ladite ouverture.

7. Boîtier selon la revendication 6, caractérisé en ce que l'accès dudit ou desdits seconds câbles au boîtier est obtenu au moyen d'une rangée de créneaux prévus sur la face externe d'une au moins des demi-coquilles, la partie pleine (122, 222) de ces créneaux venant au contact du capot lorsque celui-ci est fermé, et leur partie vide (121, 221) assurant le guidage dudit ou desdits seconds câbles vers l'extérieur du boîtier.

8. Boîtier selon les revendications 5 et 7, caractérisé en ce que lesdits trous (125, 225) sont pratiqués dans la partie pleine (122, 222) desdits créneaux.

9. Boîtier selon l'une des revendications 1 à 8, caractérisé en ce que chaque demi-coquille présente une demi-ouverture formant, avec la demi-ouverture de l'autre demi-coquille, une ouverture pour l'introduction, dans le boîtier, dudit ou desdits premiers câbles (109, 209).

10. Boîtier selon la revendication 9, caractérisé en ce que cette dernière ouverture se prolonge par un passage (600) permettant un guidage dudit ou desdits premiers câbles à son ou à leur introduction dans le boîtier.

11. Boîtier selon la revendication 10, caractérisé en ce que ledit passage (600) est équipé d'ailettes (118, 218) de séparation desdits câbles.

12. Boîtier selon l'une des revendications 1 à 11, caractérisé en ce qu'il est associé à une bride (400) de fixation à un support (500).

13. Boîtier selon la revendication 12, caractérisé en ce que cette bride comporte une partie s'interposant sur le trajet desdits seconds câbles accédant au boîtier, et est munie dans cette partie d'ouvertures (401) permettant un passage ordonné de ces câbles.

## Patentansprüche

1. Gehäuse zum Schutz vor elektromagnetischen Störungen für eine elektrische Verbindungsvorrichtung, die mindestens ein erstes elektrisches Kabel (109, 209), das mit einer Schutzabschirmung (108, 208) gegen elektromagnetische Störungen versehen ist, mit mindestens einem zweiten elektrischen Kabel (113, 213) verbinden kann, wobei das Gehäuse zwei Halbschalen (100, 200) aufweist und diese beiden Halbschalen im zusammengefügten Zustand die die Kabel verbindende Vorrichtung enthalten können, wobei die erste Halbschale auf ihrer Innenseite für dieses erste Kabel ein Mittel (114, 115) aufweist, um sie mit der Abschirmung dieses ersten Kabels über einen Teil der Peripherie dieser Abschirmung in Kontakt zu bringen, während die zweite Halbschale für dieses erste Kabel ein Mittel (214, 216) aufweist, um sowohl diese Halbschale mit der Abschirmung dieses ersten Kabels auf einem anderen Bereich der Peripherie dieser Abschirmung in Kontakt zu bringen als auch einen Druck dieser Abschirmung gegen die erste Halbschale an der Stelle zu erzeugen, an der diese Halbschale mit der Abschirmung in Kontakt kommt, dadurch gekennzeichnet, daß die beiden Halbschalen aus einem gegen elektromagnetische Störungen dichten Material sind und daß das Mittel, durch das die Abschirmung mit der ersten Halbschale in Kontakt gelangt, eine Kerbe (115) in einer Kante (114) auf der Innenseite dieser Halbschale aufweist, wobei diese Kerbe eine Breite besitzt, die dem Durchmesser der Abschirmung angepaßt ist.

2. Gehäuse nach Anspruch 1, dadurch gekennzeichnet, daß das Mittel, durch das ein Druck auf die Abschirmung und ein Kontakt zwischen der Abschirmung und der zweiten Halbschale erzeugt wird, einen Zapfen (216) in einer Kante (214) auf der Innenseite dieser Halbschale enthält, der so angeordnet ist, daß er vor der Kerbe liegt und in sie eindringt, wenn die beiden Halbschalen zusammengefügt werden.

3. Gehäuse nach Anspruch 1 für eine elektrische Verbindungsvorrichtung, die eine Vielzahl von ersten Kabeln mit einer Vielzahl von zweiten Kabeln verbinden kann, dadurch gekennzeichnet, daß jede Halbschale in der Kante eine Reihe von durch Zapfen voneinander getrennte Kerben aufweist, wobei die Reihen von Kerben und Zapfen der beiden Halbschalen zueinander derart angeordnet sind, daß die Zapfen einer Halbschale sich vor den Kerben der anderen Halbschale befinden und in sie eindringen, wenn die beiden Halbschalen zusammengefügt werden, wobei in jeder Halbschale die Kerben somit ebensoviele Mittel zum Kontaktieren der Abschirmung von ersten Kabeln mit dieser ersten Halbschale und die Zapfen ebensoviele Mittel zum Druck und zum Kontaktieren der Abschirmung anderer erster Kabel mit dieser Halbschale bilden.

4. Gehäuse nach einem der Ansprüche 1 bis 3, dadurch gekennzeichnet, daß das oder die zweiten Kabel ebenfalls mit einer Abschirmung (124, 224) zum Schutz gegen elektromagnetische Störungen versehen sind und mindestens eine der beiden Halbschalen mit Mitteln für den elektrischen Anschluß dieser Abschirmung mit dieser Halbschale versehen ist.

5. Gehäuse nach Anspruch 4, dadurch gekennzeichnet, daß diese letztgenannte Abschirmung einen spiralförmigen Metalldraht besitzt und die Mittel für den elektrischen Anschluß ein Loch oder mehrere Löcher (125, 225) in mindestens einer der Halbschalen aufweisen, die je einen Stift (126, 226) aufnehmen, der an den spiralförmigen Metalldraht oder die spiralförmigen Metalldrähte anschließbar ist.

6. Gehäuse nach einem der Ansprüche 1 bis 5, dadurch gekennzeichnet, daß jede Halbschale eine Halböffnung aufweist, die mit der Halböffnung der anderen Halbschale eine Öffnung für den Zugang zu dem Kontakt oder den Kontakten der elektrischen Verbindungsvorrichtung bildet, die mit dem zweiten Kabel oder den zweiten Kabeln verbunden sind, und daß es weiter eine lösbare Haube (300) aufweist, um seine Dichtheit in Höhe dieser Öffnung zu gewährleisten.

7. Gehäuse nach Anspruch 6, dadurch gekennzeichnet, daß der Zugang des zweiten Kabels oder der zweiten Kabel zum Gehäuse über eine Reihe von Zacken erfolgt, die auf der Außenseite mindestens einer der Halbschalen vorgesehen sind, wobei der massive Teil (122, 222) dieser Zacken mit der Haube in Kontakt gerät, wenn diese geschlossen ist, und ihr hohler Teil (121, 221) die Führung des zweiten Kabels oder der zweiten Kabel nach außerhalb des Gehäuses gewährleistet.

8. Gehäuse nach den Ansprüchen 5 und 7, dadurch gekennzeichnet, daß die Löcher (125, 225) im massiven Teil (122, 222) der Zacken ausgeführt sind.

9. Gehäuse nach einem der Ansprüche 1 bis 8, dadurch gekennzeichnet, daß jede Halbschale eine Halböffnung aufweist, die mit der Halböffnung der anderen Halbschale eine Öffnung für die Einführung des ersten Kabels oder der ersten Kabel (109, 209) in das Gehäuse bildet.

10. Gehäuse nach Anspruch 9, dadurch gekennzeichnet, daß diese Öffnung durch einen Durchlaß (600) verlängert wird, der eine Führung des ersten Kabels oder der ersten Kabel während seiner oder ihrer Einführung in das Gehäuse ermöglicht.

11. Gehäuse nach Anspruch 10, dadurch gekennzeichnet, daß dieser Durchlaß (600) mit Flügeln (118, 218) zur Trennung der Kabel versehen ist.

12. Gehäuse nach einem der Ansprüche 1 bis 11, dadurch gekennzeichnet, daß es einem Flansch (400) zur Befestigung an einem Träger (500) zugeordnet ist.

13. Gehäuse nach Anspruch 12, dadurch gekennzeichnet, daß dieser Flansch einen Bereich aufweist, der den Weg der zweiten Kabel kreuzt, die zum Gehäuse kommen, und in diesem Bereich mit Öffnungen (401) versehen ist, die einen geordneten Durchgang dieser Kabel erlauben.

## Claims

1. Housing providing protection against electromagnetic interference for an electrical connection device adapted to connect at least one first electrical cable (109, 209) provided with a protective screen (108, 208) against electromagnetic interference (EMI) to at least one second electrical cable (113, 213), said housing comprising two half-shells (100, 200) adapted to contain, when assembled together, said connection device connecting said cables and the inside face of a first half-shell being provided with means (114, 115) for simultaneously ensuring establishment of contact thereof with the screen of said first cable over one part of the outer contour of said screen and the inside face of the second half-shell being provided with means (214, 216) for simultaneously ensuring establishment of contact thereof with the screen of said first cable over the other part of the outer contour of said screen and establishment of pressure of said screen against said first half-shell at the position of contact thereof with said screen;
characterised in that the two half-shells are made of an EMI-tight material and in that said means for establishing contact between said screen and said first half-shell include a notch (115) formed in a projecting edge (114) provided on the internal face of said half-shell and having a width chosen to suit the diameter of said screen.

2. Housing according to claim 1 characterised in that said means for establishing pressure and contact of said screen with said second half-shell consist of a lug (216) formed in a projecting edge (214) provided on the internal face of said half-shell and arranged to face said notch and to penetrate thereinto once the two half-shells have been assembled.

3. Housing according to claim 1 for an electrical connection device suitable for connecting a plurality of first cables to a plurality of second cables characterised in that each half-shell includes a row of notches in said projecting edge separated by lugs, the rows of notches and lugs of the two half-shells being mutually disposed whereby the lugs of each half-shell are facing and penetrate into the notches of the other half-shell when the two half-shells are assembled, said notches within each of said half-shells constitute an equivalent number of means for establishing said contact of the screen of said first cable with said half-shell and the lugs within each of said half-shells constitute an equivalent number of means for establishing pressure and contact with the screen of further first cables with said half-shell.

4. Housing according to any one of claims 1 to 3 characterised in that when said second cable or cables is also provided with a screen (124, 224) providing protection against electromagnetic interference one at least of the two half-shells is provided with means for establishing electrical connection of said second cable screen with this half-shell.

5. Housing according to claim 4 characterised in that said second cable screen includes a twisted metal wire and said means for establishing electrical connection comprise one or several holes (125, 225) formed in at least one of said half-shells and each adapted to receive a terminal (126, 226) for connection to one of said twisted metal wires.

6. Housing according to any one of claims 1 to 5 characterised in that each half-shell has a half-opening which together with the half-opening of the other half-shell constitutes an opening giving access to the contact or contacts of said electrical connection device which are connected to said second cable or cables and said housing further includes a detachable cover (300) for sealing said opening.

7. Housing according to claim 6 characterised in that access of said second cable or cables to said housing is obtained by means of a row of crenellations provided on the outer face of one at least of said half-shells, the solid portion (122, 222) of said crenellations coming into contact with the cover when the latter is closed and the gaps (121, 221) therein guiding said second cable or cables towards the outside of the housing.

8. Housing according to claims 5 and 7 characterised in that said holes (125, 225) are formed in the solid portion (122, 222) of said crenellations.

9. Housing according to any one of claims 1 to 8 characterised in that each half-shell has a half-opening that forms together with the half-opening of the other half-shell an opening for insertion of said first cable or cables (109, 209) into the housing.

10. Housing according to claim 9 characterised in that said opening is extended by a passage (600) guiding said first cable or cables on insertion thereof into the housing.

11. Housing according to claim 10 characterised in that said passage (600) is fitted with ribs (118, 218) for separating said cables.

12. Housing according to any one of claims 1 to 11 characterised in that it is associated with a clamp (400) for fixing it to a support (500).

13. Housing according to claim 12 characterised in that said clamp includes a part that intercepts the path of said second cables accessing the housing and is provided in said part with openings (401) allowing orderly passage of said cables.
